# EUROPEAN PATENT SPECIFICATION

(11) **EP 0 538 175 B1**
(45) Date of publication and mention of the grant of the patent: **27.12.1996**
(21) Application number: 92610069.4
(22) Date of filing: 07.10.1992
(51) Int. Cl.: A01J 25/12

(54) **A prepressing apparatus for prepressing and cutting cheese blocks**
Vorrichtung zum Vorpressen und Schneiden von Käseblöcken
Dispositif pour prépresser et découper des blocs de fromage

(30) Priority: 11.10.1991 DK 1729/91
(43) Date of publication of application: 21.04.1993
(73) Proprietor: APV PASILAC A/S, 8100 Arhus C (DK)
(72) Inventor: Busk, Per, Sejs, DK-8600 Silkeborg (DK)
(74) Representative: Thierry-Carstensen, Ole Jean

(56) References cited:
- EP-A- 0 429 711

## Description

The invention relates to a prepressing apparatus for prepressing and cutting cheese blocks, said apparatus comprising a vat for receiving cheese curd on a perforated conveyor belt, an end wall formed by a transverse, vertically displaceable transverse knife for cutting a cheese cake pressed from the cheese curd in transverse direction by stepwise advancing thereof by means of the conveyor belt, as well as longitudinal knives for cutting the cheese cake in longitudinal direction, said longitudinal knives being arranged after said transverse knife when seen in the advancing direction of the conveyor belt and said apparatus comprises means for scanning the thickness of the cheese cake and for at least cutting said cheese cake in transverse direktion into pieces of a size depending on the measured thickness distribution.

Prepressing apparatuses of the above type are known, which are referred to as batch prepresses. These prepresses comprise a prepressing vat with a bottom formed by a perforated conveyor belt. The whey and the cheese grains or cheese curd are fed to the belt in measured quantities in such a manner that the same quantity of cheese with respect to both volume and weight is always prepressed. After the feeding of whey and cheese grains, a pressing plate is lowered over the above fluid, and the cheese grains or the cheese curd is compressed, whereafter the whey is drained off. After removal of the pressing plate, the resulting compressed cheese cake is stepwise removed at the end of the prepressing vat while the transverse knife forming the end wall is alternately raised and lowered. Longitudinal knives are provided behind the transverse knife, said longitudinal knives cutting the cheese in longitudinal direction transverse to the transverse knife with the result that a number of cut cheese blocks are formed. While passing the transverse knife, the cheese cake is transferred to another conveyor belt, which after the cutting turns the cheese blocks upside down while transferring said blocks to a third conveyor belt. The third conveyor belt carries the turned cheese blocks sideways out through an opening in the prepressing apparatus and away therefrom, whereafter the cheese blocks are to be subjected to a final pressing.

The thickness of the prepressed cheese cake varies both lengthwise and transverse thereto especially on account of the relatively large size of the cheese vat, which can be 6 to 7 m long and about 1.5 m wide, and on account of the prepressed cheese cake on the first conveyor belt inside the prepressing vat being of a weight of 1,000 to 1,500 kg although the prepressing is performed by means of a solid pressing plate. The cheese cake is cut by the first conveyor belt stepwise advancing said cake the same length for cutting in the transverse direction by means of the transverse knife. The longitudinal knives are arranged at the same mutual distance. The weight of the cut cheese blocks depends therefore on the height of each cheese block after the cutting.

The prepressed cheese cake is typically more or less oblique both in the longitudinal direction and in the transverse direction. These obliquities vary from cheese cake to cheese cake both in connection with a manual and in connection with an automatic placing of the whey and cheese grains in the prepressing vat. The parameters for the placing and for the composition of the cheese curd as well as for mechanical properties cannot be 100% identical from time to time. Today very strict requirements are therefore presented to the ready-made cheeses which must be of an identical weight and height. A typical requirement to a cheese of 15 kg and an ideal height of 95 mm is that a tolerance of ± 2.5 mm applies which corresponds to ± 395 g. 90% of the cut cheeses must be within the above tolerance.

The prepressed cheese cake is higher than the ready-pressed cheese, and accordingly the variations in height of the prepressed cheese cake can be more significant.

EP-A-0 429 711 discloses an apparatus for cutting foodstuff. The apparatus comprises means for scanning the thickness of the foodstuff and means for allowing transverse variation in the dimension between cuts of the foodstuff depending on the scanned thickness such that pieces of a predetermined weight are achieved.

The prepressing apparatus according to the invention is characterised in that the means for scanning the thickness of the cheese cake are sensors mounted on a vehicle displaceably arranged on a guide system mounted above the prepressing vat, and that the means are adapted so as after the prepressing of the cheese to be carried across the cheese cake at a fixed distance from and parallel to the surface of the conveyor belt.

As a result a very high accuracy is obtained with respect to the weight and volume of the ready-made cheeses. The prepressed cheese cake is measured across its entire length after the prepressing, whereafter the first conveyor belt advances the cheese cake across distances always adjusted to the measured thickness or height within the range in question with the effect that cheeses of the same weight and volume are left between each transverse cutting.

Thereafter the mutual distance of the longitudinal knives transverse to the cheese cake is adjusted in response to the measured thickness of said cheese cake, whereby the cheese blocks always are of the same weight.

The longitudinal knives can be mounted on a common support implementing the cutting by a displacement up and down in vertical direction and the said support may be fixedly connected to the transverse knife. Then the resulting vertical displacement of the longitudinal knives can be performed by means of the same driving mechanism as the transverse knife. In a particularly simple embodiment the longitudinal knives may be displaceably arranged on at least one common transverse guide rail and be connected to their respective activating means for displacement of the knives on, said guide rail.

According to the invention the activating means for displacing the knives on the guide rail may be formed by a driving motor associated with each longitudinal knife and comprising a stepwise rotatable output shaft, which extends in the advancing direction of the conveyor belt and is connected to the corresponding knife by means of a radially projecting arm secured on the output shaft, where the free end of the arm is provided with two fingers gripping about their respective side of a fixed part on the longitudinal knives.

The invention is described in greater detail below with reference to the accompanying drawing, in which
Figure 1 is a perspective view of a prepressing apparatus of a commonly known type,
Figure 2 is a diagrammatic and also perspective view on a larger scale of parts of the prepressing apparatus in the area about the cutting knives inside the prepressing vat of the apparatus,
Figure 3 is a side view of a preferred embodiment of a prepressing apparatus according to the invention,
Figure 4 is an end view of the embodiment of Figure 3,
Figure 5 is a perspective view on a larger scale of parts of the prepressing apparatus according to the invention, showing the area about the cutting knives, and
Figure 6 is a perspective view of a single longitudinal knife for cutting a cheese cake in longitudinal direction together with associated parts of the prepressing apparatus according to the invention.

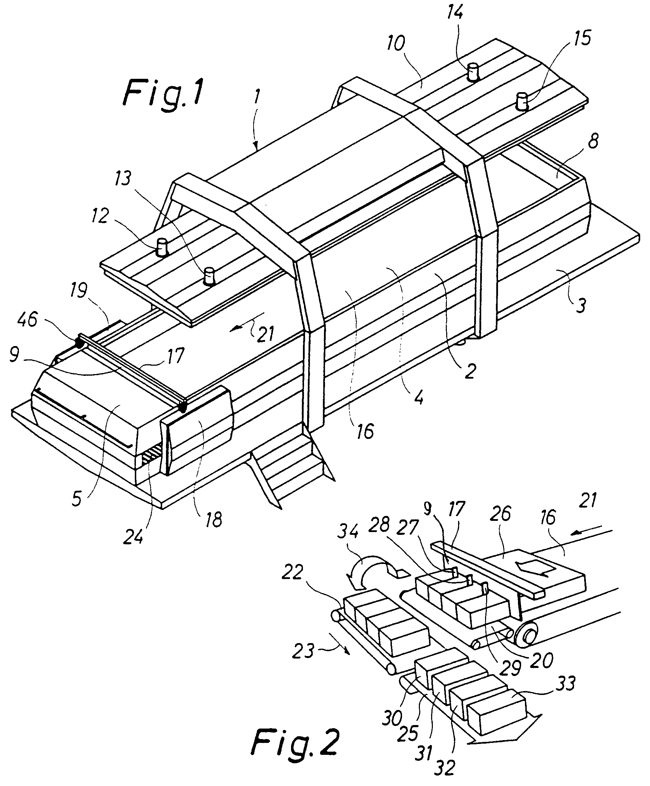

The prepressing apparatus of Figure 1 is designated the general reference numeral 1 and is of a commonly known type marketed by the Applicant as a batch prepress. It comprises a prepressing vat 2 resting on a base 3. The prepressing vat 2 comprises a prepressing section 4 and a cutting section 5. The prepressing section 4 is defined by two longitudinal, solid walls 6 and 7 and at one end by a solid end wall 8 and at the opposite end by a transverse knife 9. During the prepressing procedure the transverse knife sealingly closes the end in question. The transverse knife is capable of being displaced up and down in vertical direction.

A cover 10 is provided over the prepressing section 4, said cover being displaceable up and down in vertical direction by means of driving means not shown in detail. A pressing plate 11 is provided below the cover 10, said plate being displaceable down and up in vertical direction relative to the cover by means of piston-cylinder means 12, 13, 14, and 15.

The bottom of the prepressing vat 2 is formed by a perforated first conveyor belt 16 extending to and ending at the transverse knife 9, cf. Figure 2. The transverse knife 9 is supported by a girder 17 connected at each end by piston rods not shown in greater detail to the piston-cylinder means for driving the transverse knife up and down in vertical direction. These piston-cylinder means are provided inside boxes 18 and 19, respectively, on the side of the prepressing apparatus.

The first conveyor belt 16 abuts a second conveyor belt 20 positioned in the cutting section 5 of the prepressing apparatus close to the transverse knife 9. Both the first and the second conveyor belt 16 and 20 have an advancing direction running from the prepressing section 4 of the prepressing apparatus to the cutting section 5 thereof. The second conveyor belt 20 is in the advancing direction indicated by an arrow 21 followed by a third conveyor belt 22 with an advancing direction indicated by an arrow 23 and extending transverse to the advancing direction 21 of the first and the second conveyor belt 16, 20. The third conveyor belt 22 is positioned in the cutting section 5 and abuts an opening therein. The opening is indicated by means of hatched lines at the reference numeral 24 in Figure 1. As indicated in Figure 2, a fourth conveyor belt 25 with the same advancing direction 23 as the third conveyor belt 22 may be provided outside the above opening.

The prepressing apparatus 1 is operated in the following manner: Whey and cheese grains or curd are fed into the cheese vat through pipes not shown in greater detail and in an amount being adjusted in such a manner that the same amount of cheese grains is always fed therein. Then the cover 10 is lowered so as to close the cheese vat 2 over the prepressing section 4, whereafter the pressing plate 11 is pressed downwards to compres the cheese grains or the curd. After the pressing, the whey is drained off from the cheese vat 2 through the perforated first conveyor belt 16 and outlet openings in the bottom of the prepressing vat 2. After completion of the prepressing procedure, the cover 10 is raised again together with the retracted pressing plate 11 above the prepressing vat 2 to the position shown in Figure 1. The prepressing results in a large prepressed cheese cake 26 left on the first conveyor belt 16. The cheese cake 26 is advanced stepwise by means of the first conveyor belt out of the pressing section 4 past the transverse knife 9 which is raised during each advancing step, only part of said cheese cake appearing from Figure 2. When the cheese cake has been advanced a predetermined distance forwards, the transverse knife 9 is lowered and the cheese cake 26 is cut in transverse direction as indicated in Figure 2. As diagrammatically shown in Figure 2, a plurality of knives 27, 28, and 29 are provided behind the transverse knife 9, said knives being adapted to cut the cheese cake 26 in longitudinal direction. These knives are referred to below as longitudinal knives. In the known apparatus, the cutting is performed in the longitudinal direction during the advancing of the cheese cake past the permanent knives 27, 28, and 29. The longitudinal and transverse cutting results in a plurality of ready-made prepressed cheese blocks, some of said blocks being indicated by the reference numerals 30, 31, 32, and 33 in Figure 2. These cheese blocks are transferred from the second conveyor belt 20 to the third conveyor belt 22, said second conveyor belt 20 being adapted in such a manner not described in greater detail that the cheese blocks 30 to 33 are subjected to a turning, cf. the arrow 34, during the latter transfer. The third conveyor belt 22 and a fourth conveyor belt 25 carry the cheese blocks 30 to 33 out of the prepressing apparatus 1.

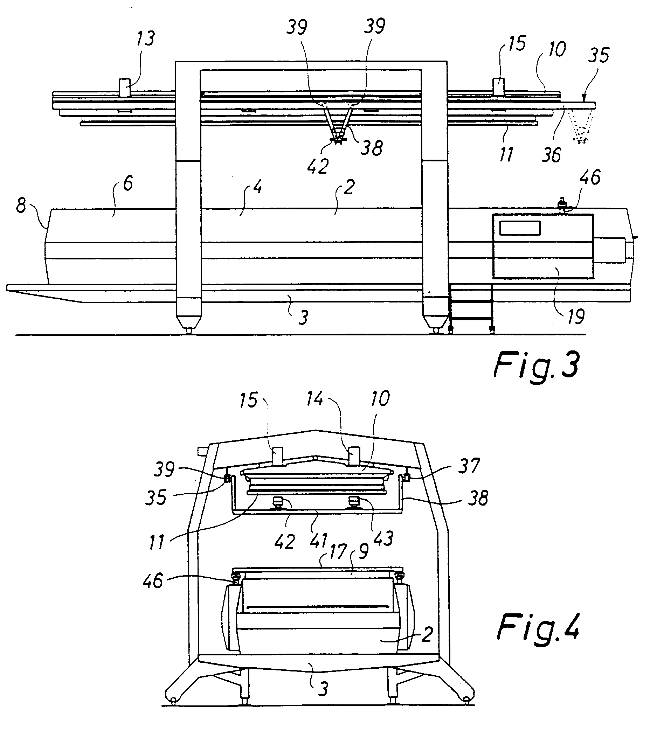

The prepressing apparatus 1 according to the invention shown in Figures 3 and 4 is of the same type as the prepressing apparatus shown in Figures 1 and 2, and accordingly the corresponding parts are designated the same reference numerals.

The only visible difference between the prepressing apparatus of Figure 1 and the prepressing apparatus of Figures 3 and 4 is that a scanning device is provided on a level with the cover 10 in the raised position thereof, said scanning device being designated the general reference numeral 35. The scanning device 35 comprises a longitudinal guide system 36 and 37 extending in parallel on respective side of the cover 10. The guide system 36 and 37 supports a vehicle 38 capable of being displaced from a position outside the displacement area of the cover 10, cf. the dotted lines to the right of Figure 3, and to an fro above the entire prepressing section 4 of the prepressing apparatus 1 when said cover 10 is in the raised position shown in Figures 3 and 4. The vehicle 38 comprises wheels 39, 40 running in the guide system 36, 37 and besides being propelled by means not shown in greater detail.

The vehicle comprises a horizontal carrying frame 41 extending transverse to the prepressing vat 2. Below the cover 10 in the raised position thereof, the carrying frame carries two sensors 42 and 43 for measuring the thickness of the prepressed cheese cake, said measuring being performed during the movement of the vehicle 38 across the cheese cake at specific locations with a predetermined mutual distance.

The sensors in question are of a commonly known type and may for instance be of the type marketed by the company Endress + Hauser GmbH + Co., Germany, as ultrasonic sensors DU 40 and DU 41.

These sensors render it possible by a single passing of the vehicle across the cheese vat 2 to measure the thickness of the cheese block versus both the length and the width of said cheese block. These measuring results render it possible to determine the placing of the longitudinal and the transverse cuttings in the cheese cake by means of an electronic control device of a type not shown in greater detail, whereby the ready-made prepressed cheese blocks are always of the same weight.

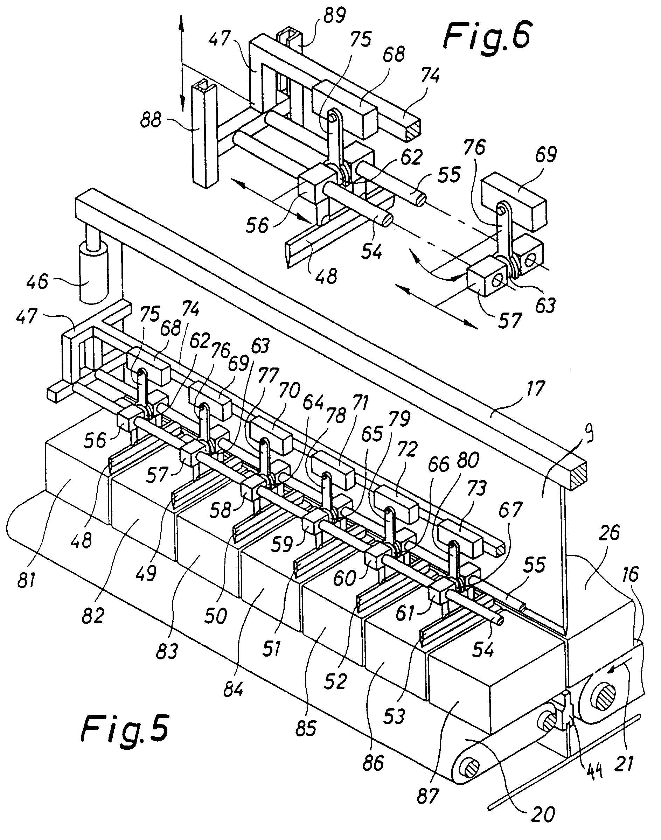

The measuring results provided by the scanning device are initially used for controlling the activation of the first conveyor belt 16 in such a manner that the cheese cake 26 is always advanced a distance allowing the transverse knife 9 to cut a piece of the same weight of said cheese cake. The measuring results are furthermore used for adjusting the mutual distance between the longitudinal knives. Accordingly, the longitudinal knives must be structured so as to allow a mutual adjustment. An embodiment of such a structure appears from Figures 5 and 6.

Figure 5 illustrates the abutting conveyor belts, viz. the first conveyor belt 16 in the prepressing section 4 and the second conveyor belt 20 in the cutting section 5. A transverse contact strip 44 is provided between the conveyor belts. The transverse knife 9 sealingly abuts the contact strip 44 during the prepressing procedure in the prepressing section 4. The piston-cylinder means used for displacing the transverse knife 9 is indicated by the reference numeral 46 in Figure 5. Figure 5 clearly shows that the piston is connected to the girder 17 of the transverse knife 9. A carrying frame 47 for the longitudinal knives 48, 49, 50, 51, 52, and 53 is permanently connected to the transverse knife 9. The longitudinal knives are shown with a relatively short vertical extent for the sake of clarity, but they may, of course, be of an extent allowing a complete cutting of the cheese blocks in question. The carrying frame 47 comprises two mutually parallel guide rails 54 and 55 extending parallel to the transverse knife 9. The longitudinal knives 48 to 53 are displaceably arranged on the guide rails 54 and 55, a slide block 56, 57, 58, 59, 60, and 61 being mounted on the guide rails 54 and 55 and being formed integral with or permanently connected to each longitudinal knife 48 to 53. As illustrated most clearly in Figure 6, each slide block comprises a cylindrical part 62, 67 positioned between the guide rails 54, 55, said cylindrical part extending in the longitudinal direction of the prepressing vat 2.

A motor 68, 69, 70, 71, 72, and 73 is provided immediately above each longitudinal knife 48 to 53. The motors are secured to a girder 74 extending parallel to the guide rails 54 and 55. These motors are stepping motors with output shafts extending parallel to the cylindrical parts 62 to 67 on the slide blocks 56 to 61 of the longitudinal knives 48 to 53. An arm 75, 76, 77, 78, 79, and 80 is permanently mounted on the output shaft of each motor 68 to 73. Each arm grips by means of two fingers about the cylindrical part of the slide block 56 to 61 of the associated longitudinal knife 48 to 53. A rotation of the output shafts of the motors 68 to 73 causes a reciprocating displacement of the longitudinal knives 48 to 53 in the longitudinal direction of the guide rails 54, 55.

A suitable structuring of the electronic control device of the prepressing apparatus 1 renders it possible to use the measuring results of the scanning device 35 of the thickness for controlling each motor 68 to 73 in such a manner that the longitudinal knives 48 to 53 are adjusted relative to one another and cut cheese blocks 81 to 87 of an identical weight despite variations in the thickness.

As the longitudinal knives 48 to 53 as mentioned in Figure 5 are supported by a carrying frame 47 permanently connected to the transverse knife 9, the cutting of the cheese cake 26 is performed simultaneously in the transverse and the longitudinal direction. As indicated in Figure 6, the carrying frame 47 can, however, also be structured so as to co-operate with vertical guide rails 88, 89. The vertical guide rails 88, 89 render it possible to displace the longitudinal knives by means of suitable driving means not shown, said displacement being performed independently of the transverse knife 9 so as thereby for instance to cause the longitudinal knives to cut after the transverse knife 9 has performed a transverse cutting of the cheese cake 26.

The use of the prepressing apparatus 1 according to the invention results as previously in a prepressing of a cheese cake 26, whereafter the thickness of the cheese cake is measured by the scanning device 35 being moved across the cheese cake 26 while the cover 10 is in its upper position. The measurings are performed by means of two sensors 42 and 43 capable of measuring the thickness relations in the transverse direction of the entire cheese cake 26 as a function of the movement of the associated vehicle 38 in the longitudinal direction of the prepressing apparatus, said measurings being performed at suitably short regular intervals during the movement of the vehicle. The measuring results are processed in a conventional manner by means of an electronic control device associated with the prepressing apparatus 1. Subsequently, the electronic control device activates the advancing of the cheese cake 26 relative to the transverse knife 9 in such a manner that it is always possible to cut transverse blocks of the same weight from the same cheese cake 26 despite variations in the thickness. The control device transmits furthermore such signals to the motors 68 to 73 of the longitudinal knives 48 to 53 that said motors subject the longitudinal knives 48 to 53 to the necessary mutual displacement of usually a few mm with the effect that said knives can cut cheese blocks of the same weight despite the variations in the thickness.

The invention has been described with reference to a preferred embodiment. Many modifications may, however, be performed without thereby deviating from the scope of the invention. The longitudinal knives may for instance also be driven by means of their respective piston-cylinder means instead of by means of the motors 68 to 73 shown with radially extending arms 75 to 80.

## Claims

1. A prepressing apparatus for prepressing and cutting cheese blocks (81 to 87), said apparatus comprising a vat (2) for receiving cheese curd on a perforated conveyor belt (16), an end wall formed by a transverse, vertically displaceable transverse knife (9) for cutting a cheese cake (26) pressed from the cheese curd in transverse direction by stepwise advancing thereof by means of the conveyor belt (16), as well as longitudinal knives (48 to 53) for cutting the cheese cake (26) in longitudinal direction and being arranged after said transverse knife (9) when seen in the advancing direction (21) of the conveyor belt (16), and said apparatus comprises means (35) for scanning the thickness of the cheese cake (26) and for at least cutting said cheese cake (26) in transverse direction into pieces of a size depending on the measured thickness distribution, characterised in that the means (35) for scanning the thickness of the cheese cake are sensors (42, 43) mounted on a vehicle (38) displaceably arranged on a guide system (36, 37) mounted above the prepressing vat, and that the means are adapted so as after the prepressing of the cheese to be carried across the cheese cake (26) at a fixed distance from and parallel to the surface of the conveyor belt (16).

2. A prepressing apparatus as claimed in claim 1, characterised in that whereby the longitudinal knives (48 to 53) are displaceably arranged on at least one common transverse guide rail (54, 55) and are connected to their respective activating means (68 to 73) for displacement of the knives (48 to 53) on said guide rail (54, 55), characterised in that the activating means (68 to 73) are formed by a driving motor associated with each longitudinal knife (48 to 53) and comprising a stepwise rotatable output shaft, which is connected to the corresponding knife (48 to 53) by means of a radially projecting arm (75 to 80) secured on each output shaft, where the free end of the arm is provided with two fingers gripping about their respective side of a fixed part (62 to 67) on the longitudinal knives (48 to 53).

## Patentansprüche

1. Vorrichtung zum Vorpressen und Schneiden von Käseblöcken (81 bis 87), wobei die Vorrichtung einen Bottich (2) zum Aufnehmen von geronnenem Käse auf einem gelochten Förderband (16), eine durch ein querliegendes, vertikal verschiebbares Quermesser (9) gebildete Endwand zum Schneiden eines Käsestücks (26), das aus dem geronnenen Käse in Querrichtung durch schrittweises Vorwärtsbewegen durch das Förderband (16) gepreßt wird, sowie Längsmesser (48 bis 53) zum Schneiden des Käsestücks (26) in Längsrichtung hat, die, in der Vorwärtsrichtung (21) des Förderbandes (16) betrachtet, hinter dem Quermesser (9) angeordnet sind, und wobei die Vorrichtung Mittel (35) zum Abtasten der Dicke des Käsestücks (26) und mindestens zum Schneiden des Käsestücks (26) in Querrichtung in Stücke einer von der gemessenen Dickenverteilung abhängigen Größe hat, **dadurch gekennzeichnet,** daß die Mittel (35) zum Abtasten der Dicke des Käsestücks Sensoren (42, 43) sind, die auf einem Wagen (38) befestigt sind, der verschiebbar auf einem Führungssystem (36, 37) befestigt ist, das oberhalb des Vorpreßbottichs angebracht ist, und daß die Mittel abgestimmt sind, um nach dem Vorpressen des Käses über das Käsestück (26) in einer festen Entfernung von und parallel zu der Oberfläche des Förderbandes (16) bewegt zu werden.

2. Vorrichtung zum Vorpressen nach Anspruch 1, wobei die Längsmesser (48 bis 53) verschiebbar auf mindestens einer gemeinsamen Querschiene (54, 55) angeordnet und mit ihren jeweiligen Betätigungsmitteln (68 bis 73) zur Verschiebung der Messer (48 bis 53) auf der Führungsschiene (54, 55) verbunden sind, **dadurch gekennzeichnet**, daß die Betätigungsmittel (68 bis 73) durch einen Antriebsmotor gebildet werden, der mit jedem Längsmesser (48 bis 53) verbunden ist und eine schrittweise drehbare Ausgangswelle hat, die mit dem entsprechenden Messer (48 bis 53) über einen radialen Auslegearm (75 bis 80) verbunden ist, der an jeder Ausgangswelle befestigt ist, wobei das freie Ende des Arms mit zwei Fingern versehen ist, die jeweils auf einer Seite ein feststehendes Teil (62 bis 67) an den Längsmessern (48 bis 53) umfassen.

## Revendications

1. Appareil de prépressage destiné à prépresser et découper des blocs de fromage (80 à 87), ledit appareil comprenant une cuve (2) pour recevoir du caillé de fromage sur une courroie transporteuse perforée (16), une paroi d'extrémité formée par un couteau transversal (9), mobile dans la direction verticale, destiné à couper un gâteau de fromage pressé (26) issu du caillé à fromage dans une direction transversale pendant qu'on le fait avancer pas-à-pas au moyen de la courroie transporteuse (16), ainsi que des couteaux longitudinaux (48 à 53) destinés à découper le gâteau de fromage (26) dans la direction longitudinale, lesdits couteaux longitudinaux étant agencés en aval dudit couteau transversal (9), vu dans la direction d'avance (21) de la courroie transporteuse (16), et ledit appareil comprenant des moyens (35) destinés à explorer l'épaisseur du gâteau de fromage (26) et à découper ledit gâteau de fromage (26), au moins dans la direction transversale, en morceaux d'une dimension qui dépend de la répartition de l'épaisseur mesurée, caractérisé en ce que les moyens (35) servant à explorer l'épaisseur du gâteau de fromage sont des capteurs (42, 43) montés sur un véhicule (38) qui est agencé mobile sur un système de guides (36, 37) monté au-dessus de la cuve de prépressage et en ce que les moyens sont adaptés de façon à circuler en travers du gâteau de fromage (26) après le prépressage du fromage, à une distance fixe de la surface de la courroie transporteuse (16) et parallèlement à cette surface.

2. Appareil de prépressage selon la revendication 1, caractérisé en ce que, de cette façon, les couteaux longitudinaux (48 à 53) sont agencés mobiles sur au moins un rail de guidage transversal commun (54, 55) et sont reliés à leurs moyens d'activation respectifs (68 à 73) servant à déplacer les couteaux (48 à 53) sur ledit rail de guidage (54, 55), caractérisé en ce que les moyens d'activation (68 à 73) sont formés par un moteur d'entraînement associé à chaque couteau longitudinal (48 à 53) et comprenant un arbre de sortie pouvant tourner pas-à-pas, qui est relié au couteau correspondant (48 à 53) à l'aide d'un bras en saillie radiale (75 à 80) fixé à chaque arbre de sortie, l'extrémité libre du bras étant munie de deux doigts qui prennent sur leur côté respectif d'une partie fixe (62 à 67) des couteaux longitudinaux (48 à 53).
